# EUROPEAN PATENT SPECIFICATION

(11) **EP 2 151 615 B1**
(45) Date of publication and mention of the grant of the patent: **09.10.2013**
(21) Application number: 09275057.9
(22) Date of filing: 03.08.2009
(51) Int. Cl.: F16L 15/08

(54) **Connection apparatus and method**
Verbindungsvorrichtung und Verfahren
Appareil de connexion et procédé

(30) Priority: 04.08.2008 GB 0814207
(43) Date of publication of application: 10.02.2010
(73) Proprietor: Pedem Limited, Westhill AB32 6UF (GB)
(72) Inventor: Shears, Carl, Lafayette, LOUISANA 70508 (US)
(74) Representative: Brown, James Douglas

(56) References cited:
- US-A- 4 426 105
- US-A- 4 521 042
- US-A- 4 688 832
- US-A1- 2004 150 532
- US-B1- 6 888 473

## Description

A first aspect of the present invention relates to a bottom hole assembly tool connection apparatus and method, particularly, but not exclusively, to an over torque indicator used to indicate if a connection used to connect tubular members in a drillstring (such as tubular members which form the outer housing of a downhole tool) have been over-torqued when screwing the tool together or in use of the tool in the downhole string.

Threaded connection joints such as tapered pin and box joints are used widely in the drilling industry to connect together a series of tubulars and components (which make up downhole tools and which are connected on the drilling rig) to form a drill string for insertion into the borehole. US 4,426,105 shows a known pipe joint.

Standard Oilfield County Tubular Goods (OCTG) connection joints for drill strings typically comprise a tapered male member (pin) on the lower end of one tubular member which may be inserted into a tapered female member (box) on the upper end of another tubular member such that a single shoulder is provided into which a reasonable amount of torque can be applied. Unfortunately, it is possible when making up the tool housing that the connections can be over-torqued and this relatively common problem results in over-stretch of the threaded connection which can cause damage to the connection joints. This damage can result in the threaded connection having to be reformed by cutting a new thread or in extreme cases can result in the tubular on which the joint has been over-stretched to be irrevocably damaged.

In recent years it has become known to use double shoulder connections in drill pipe joints which allow higher levels of make up torque to be applied to the drill pipe connections which are required for extended reach and/or horizontal drilling and other extreme drilling applications. However, such double shoulder high torque connections are premium connections and are more expensive than conventional single joint connections and it would be desirable to know if a more common single joint connection has been over-torqued and hence over-stretched.

From a different aspect, drilling jars are incorporated into drillstrings and are used in the event that the drillstring becomes stuck. In such an event, the upper end of the drillstring can either be pulled at surface or weight can be set down at surface in order to respectively tension or compress the jar. Such tensioning or compression stores energy in the jar until a point at which the jar fires and the energy can be released such that an anvil of the jar is struck by a hammer of the jar to cause a large impact force which will hopefully free the stuck drillstring. An example of a known drilling jar is shown in European Patent publication number EP1610047 and comprises a pair of meter valves (upper 54 and lower 56) spaced apart by a spacer collar 58. Each of the upper 54 and lower 56 meter valves comprise an annular ring within which a one way hydraulic fluid restrictor valve such as a Jeva Jet (^{™}) provided by the Lee Company, USA is housed. However, such an arrangement suffers from the potential disadvantage that each of the valve meters 54, 56 may not be rotationally aligned with one another (unlike the ideal aligned configuration as shown in Fig. 3 of EP1610047) because each of the annular rings 54, 56 and spacer collar 58 is a separate component and may be inserted into the meter housing 24 at a different rotational alignment such that the one way valves 54, 56 are not aligned with one another. If this occurs, this lack of rotational alignment can increase the friction experienced by the hydraulic fluid when the jar is firing which is a very undesirable result.

US 6,888,473 B1 (Hall) discloses a joint between a drill pipe and a tool, the joint being adapted for data acquisition and transmission to enable communication along a drill string. When the joint is made up a repeatable reference plane is established for transmitting power and tuning downhole sensors, transducers and means for sending and receiving data along the drill string. Sensors located in reference to the repeatable plane of reference may be used to indicate makeup torque in order to ensure proper drill string makeup.

According to a first aspect of the present invention there is provided a method of indicating over-torque in a screw threaded connection used to connect a male screw threaded connection provided on one tubular member to a female screw threaded connection provided on another tubular member to make up a connection in a bottom hole assembly tool, the method comprising;
torqueing the male screw threaded connection into the female screw threaded connection; and
viewing the screw threaded connection from the throughbore thereof and ascertaining if the male screw threaded connection has been over-torqued into the female screw threaded connection.

The method further comprises providing an over-torque indication means comprising an observable point on at least one of the male and female screw threaded members wherein the observable point provides an indication if the male screw threaded connection has been over-torqued into the female screw threaded connection.

The observable point may comprise a portion of the said one tubular member and may further comprise a portion of the other tubular member and preferably may comprise a face, shoulder or an end of the said one tubular member and may comprise a face, shoulder or an end of the said other tubular member. In this preferred embodiment the said portion of the one tubular member is preferably arranged to be spaced apart from the said portion of the said other tubular member by a pre-determined distance when the screw threaded connection is coupled at a pre-determined torque. Preferably, the said portion of the one tubular member is further adapted to be spaced apart from the said portion of the said another tubular member by a shorter distance when the screw threaded connection is coupled at a higher torque than the pre-determined torque typically such that an operator can view the shorter distance. Most preferably, the said portion of the one tubular member is adapted to make contact with the said portion of the said another tubular member when the screw threaded connection is coupled at a higher torque than the predetermined torque typically such that an operator can view the said contact. Typically, the internal diameter of the said face, shoulder or end of the said one tubular member is of a greater internal diameter than the internal diameter of the face, shoulder or end of the said other tubular member.

Typically, the said pre-determined torque is a torque rating that has been determined will not stretch or otherwise damage the connection but will provide a sufficiently secure connection if the connection is torqued to that rating.

According to the first aspect of the present invention there is also provided a bottom hole assembly tool connection apparatus comprising a male screw threaded connection provided on one tubular member to a female screw threaded connection provided on another tubular member, the connection apparatus comprising;
an over-torque indication means comprising an observable point provided on at least one of the male and female screw threaded members wherein the observable point provides an indication if the male screw threaded connection has been over-torqued into the female screw threaded connection.

The male screw threaded connection comprises a pin member having an end for insertion into the female screw threaded connection, wherein the pin member comprises a screw thread formed on an external surface thereof and wherein the pin member comprises a box receiving shoulder which is distal of a longitudinally outermost flat face end and located radially outer and longitudinally inner of corresponding thread. The female screw threaded connection comprises a box member having an end into which the male screw threaded connection is inserted, wherein the box member comprises a screw thread formed on an internal surface thereof and wherein the box member comprises a tapered face formed at an external end thereof and located radially and longitudinally outer of corresponding thread, the box receiving shoulder of the pin member being arranged to abut against the tapered face of the box member in use to provide a primary shoulder junction into which the majority of torque is input and a viewing means at the other end.

The male and female screw threads are single un-interrupted screw threads and are preferably arranged with a longitudinal axis substantially parallel to the longitudinal axis of the respective tubular member such that the respective screw threads are all formed with substantially the same radius.

The over-torque indication means comprises a radially inwardly projecting shoulder of the box member which is located radially and longitudinally inner of the corresponding thread and distal of the tapered face and which is arranged to be spaced apart from the flat face end such that there is a visible gap therebetween when the connection is correctly coupled at a predetermined torque and adapted to make contact with the flat face end when the connection is coupled at a higher torque than the predetermined torque;
and wherein the internal diameter of one of the shoulder and flat face end is greater than the internal diameter of the other of the shoulder and flat face end, such that an operator can view said contact or gap from a throughbore of the tool and ascertain if the male screw threaded connection has been over-torqued into the female screw threaded connection.

Preferably, the visible gap is in the region of 0.5mm to 2mm. Preferably, the box receiving shoulder of pin member is angled with respect to a perpendicular axis to the longitudinal axis of the pin member. Preferably, the box receiving shoulder is angled at approximately 15 degrees from radially innermost to outermost toward corresponding thread. Preferably, the tapered face of box member is angled with respect to a perpendicular axis to the longitudinal axis of the box member. Preferably, the tapered face is angled at approximately 15 degrees from radially innermost to outermost toward corresponding thread. Preferably, the internal diameter of the box receiving shoulder of the female box member is greater than the internal diameter of the male pin member. Preferably, a radially innermost corner of the inwardly projecting shoulder of the box member is cut away to provide a tapered face. Preferably, a radially innermost corner of the inwardly projecting shoulder of the box member is cut away to provide a tapered face.

According to a second aspect, there is provided a housing for one or more fluid flow restrictors for use in a jar mechanism, the one or more fluid flow restrictors for restricting flow of fluid therethrough in both axial directions of the jar mechanism, the housing comprising one or more fluid bypass channels formed along at least a portion of the length of the housing, said one or more fluid bypass channels being substantially parallel to the longitudinal axis of the housing.

According to the second aspect, there is also provided a housing for two or more fluid flow restrictors for use in a jar mechanism, the two or more fluid flow restrictors for restricting flow of fluid therethrough in both axial directions of the jar mechanism, the housing being adapted to prevent relative movement occurring between the said two or more fluid flow restrictors.

Preferably, the housing comprises one or more fluid bypass channels formed along at least a portion of the length of the housing, said one or more fluid bypass channels being substantially parallel to the longitudinal axis of the housing.

Typically, the housing comprises a substantially annular body preferably provided with a secure mounting for the said flow restrictor(s). Typically, the annular body is provided with two oppositely arranged one-way fluid flow restrictors. Preferably, the annular body comprises a one piece body which is typically cylindrical or tubular in shape and having a sidewall in which the two oppositely arranged one way fluid flow restrictors are located.

More preferably, the one or more fluid bypass channels are formed along the outer surface of the housing.

Typically, the housing is substantially rigid and preferably houses two longitudinally spaced apart fluid flow restrictors, the fluid flow housing preferably preventing rotational movement occurring between the restrictors.

Typically, the housing is provided with one or more bore(s) into which the respective one or more restrictor(s) are located and secured. Preferably, there is one bore(s) for each restrictor and thus there are two bores in the preferred embodiment having two restrictors. Preferably, the bores are drilled at an angle to the longitudinal axis of the housing and more preferably, one bore is drilled at an angle leading from the approximate middle of the outer circumference of the sidewall of the housing to one end of the housing and the other bore is drilled at an angle (said angle preferably being opposite to that of the other bore) leading from the approximate middle of the outer circumference of the sidewall of the housing to the other end of the housing. Preferably, each angle is in the region of 10 to 20 degrees and preferably is in the region of 15 degrees.

Typically, the housing is arranged to be in a close sliding fit with an inner mandrel of the drilling jar, and preferably said inner mandrel comprises a raised diameter portion which is in a close sliding fit during a rest configuration and preferably during an energizing configuration of the drilling jar and preferably is clear of the housing during a firing configuration and during an impact configuration. Typically, substantially no hydraulic fluid may pass between the inner circumference of the housing and the outer circumference of the said raised diameter portion during the rest and during the energizing configuration and, preferably, hydraulic fluid may pass in a gap that is created between the inner circumference of the housing and the outer circumference of the normal diameter of the inner mandrel during the firing configuration and during the impact configuration.

The present invention provides a bottom hole assembly tool connection apparatus and method as defined in the appended claims.

An embodiment of the present invention will now be described, by way of example only, with reference to the accompanying drawings, in which:-
Fig. 1 A is a cross-sectional side view of the first of six portions of a drilling jar in accordance with the second aspect which also employs over-torque indication means in accordance with the first aspect of the present invention, where the portion shown in Fig. 1A is the uppermost in use end of the drilling jar;
Fig. 1B is a cross-sectional side view of a second portion of the drilling jar of Fig. 1A, where the portion shown in Fig. 1B in use is immediately below the portion shown in Fig. 1A and immediately above the portion shown in Fig. 1C;
Fig. 1C is a cross-sectional side view of a third portion of the drilling jar of Fig. 1A and which in use is immediately below the portion shown in Fig. 1B and immediately above the portion shown in Fig. 1D;
Fig. 1D is a cross-sectional side view of a fourth portion of the drilling jar of Fig. 1A and which in use is immediately below the portion shown in Fig. 1C and immediately above the portion shown in Fig. 1E;
Fig. 1E is a cross-sectional side view of a fifth portion of the drilling jar of Fig. 1A and which in use is immediately below the portion shown in Fig. 1D and immediately above the portion shown in Fig. 1F;
Fig. 1F is a cross-sectional side view of a sixth portion of the drilling jar of Fig. 1A and which in use is located immediately below the portion shown in Fig. 1E and forms the lowermost portion in use of the drilling jar;
Fig. 2A is a cross-sectional side view of a first screw threaded connection utilised in the drilling jar of Fig. 1;
Fig. 2B is a cross-sectional side view of the connection of Fig. 2A with the two halves of the connection separated from one another for ease of reference;
Fig. 3A is a cross-sectional side view of a second screw threaded connection utilised in the drilling jar of Fig. 1;
Fig. 3B is a cross-sectional side view of the connection of Fig. 3A with the two halves of the connection separated from one another for ease of reference;
Fig. 4A is a cross-sectional side view of a first embodiment of a screw threaded connection incorporating an over-torque indication means in accordance with the first aspect of the present invention and which is also utilised in the drilling jar of Fig. 1;
Fig. 4B is a cross-sectional side view of the connection of Fig. 4A with the two halves of the connection separated from one another for ease of reference;
Fig. 4C is a closer and more detailed cross-sectional side view of the connection of Fig. 4A;
Fig. 5A is a cross-sectional side view of a second embodiment of a screw threaded connection incorporating an over-torque indication means in accordance with the first aspect of the present invention and which is also utilised in the drilling jar of Fig. 1;
Fig. 5B is a cross-sectional side view of the connection of Fig. 5A with the two halves of the connection separated from one another for ease of reference;

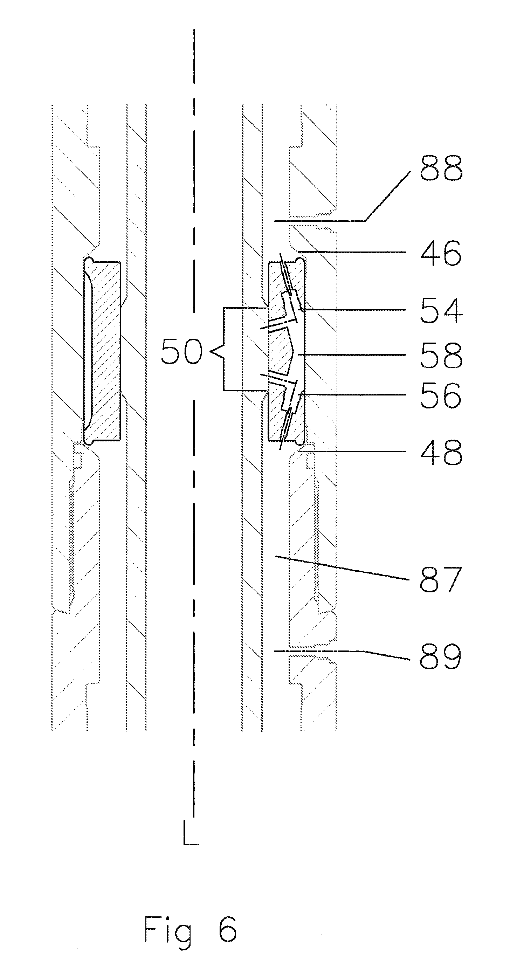

Fig. 6 is a more detailed cross-sectional side view of a portion of the drilling jar as shown in Fig. 1C incorporating a fluid flow restrictor housing in accordance with the second aspect;
Fig. 7A is a cross-sectional side view of the housing of Fig. 6 shown in isolation from the rest of the drilling jar for clarity;
Fig. 7B is an end cross-sectional view of the housing of Fig. 7A taken at the longitudinal mid-point; and
Fig. 7C is a more detailed cross-sectional side view of a portion of the drilling jar of Fig. 6.

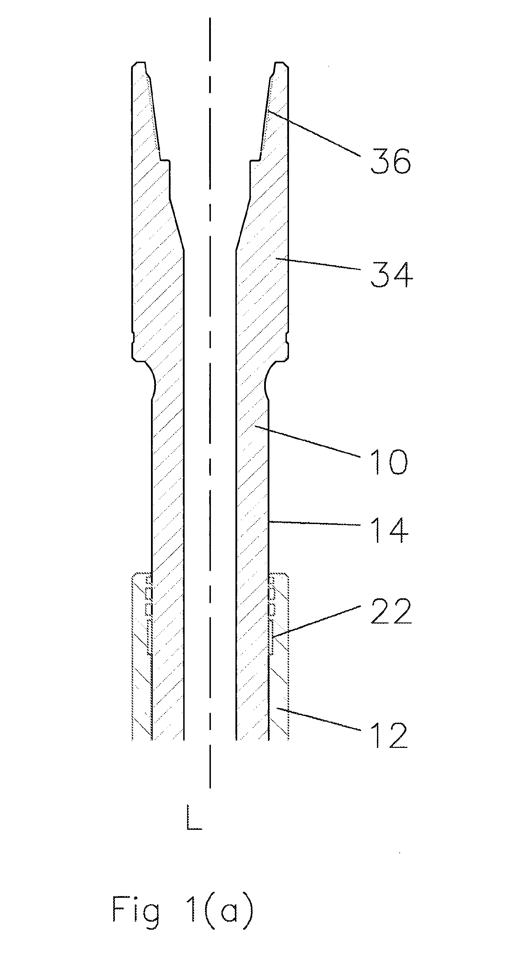

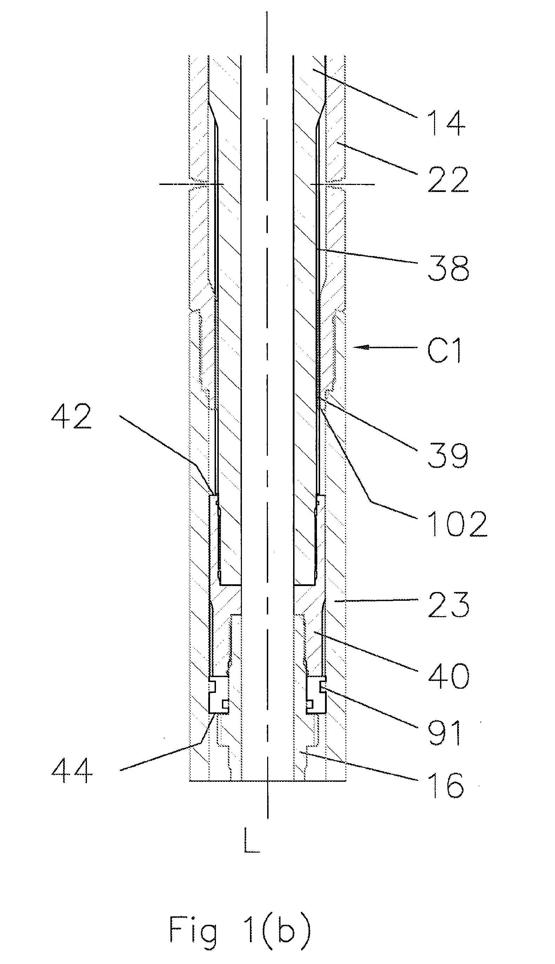

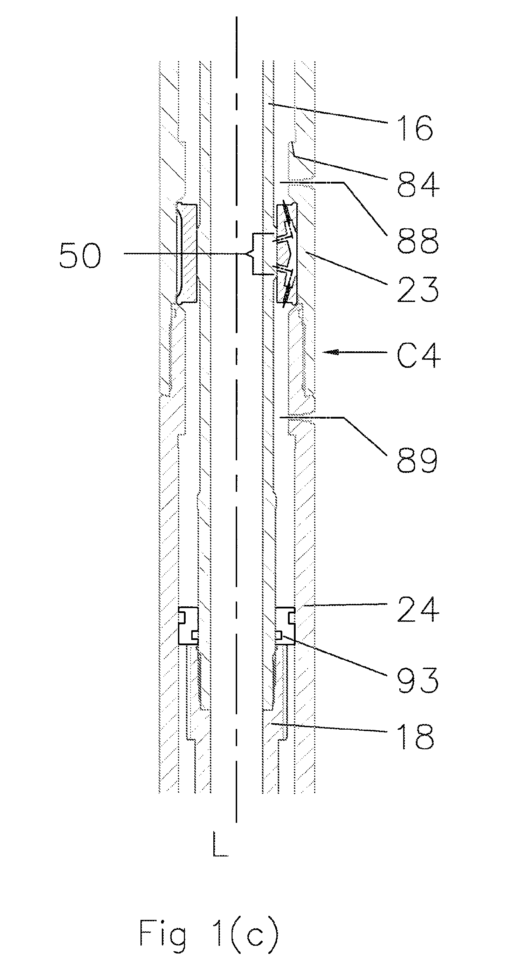

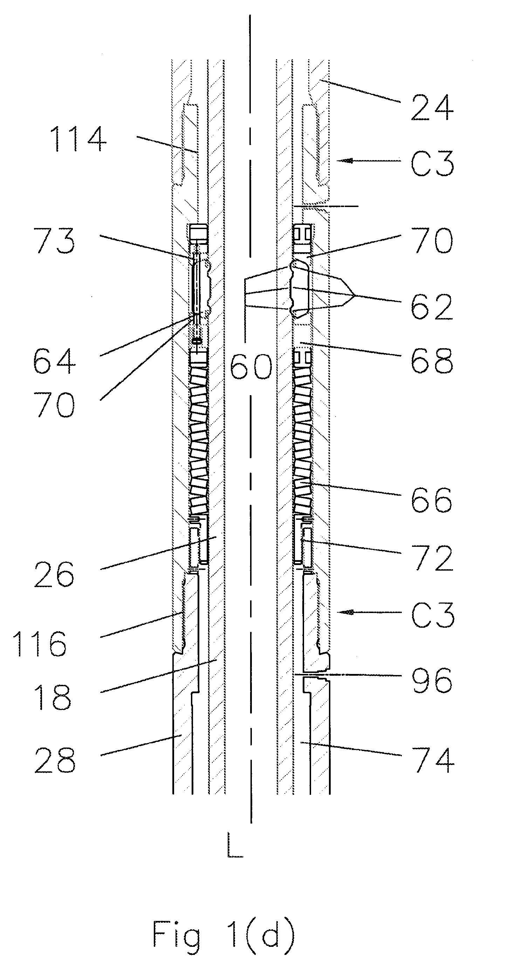

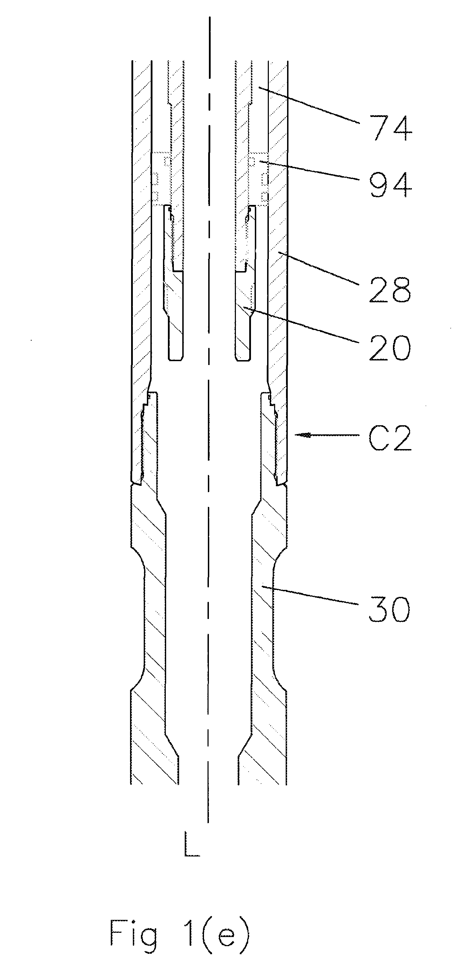

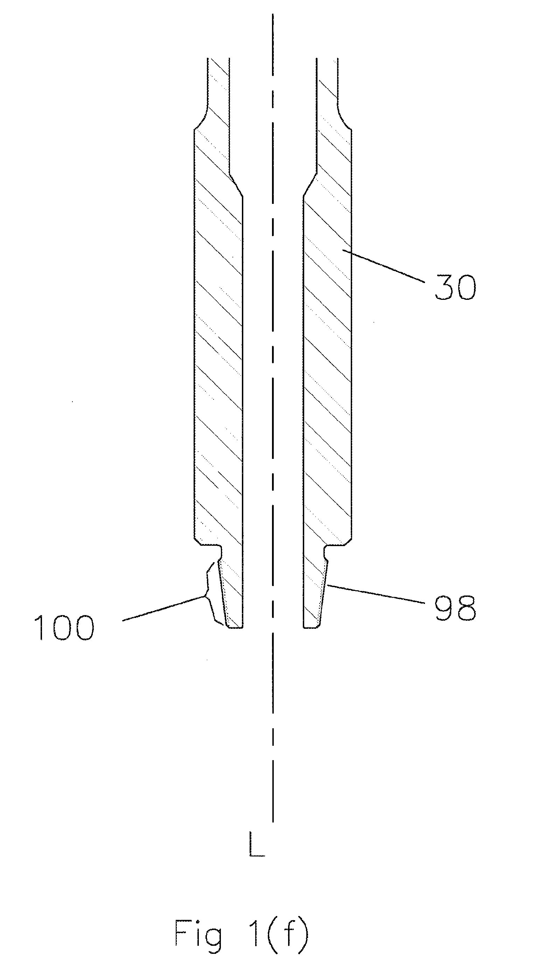

With reference to Figs. 1 to 5, embodiments of a connection means incorporating an over-torque indication means in accordance with the first aspect of the present invention will now be described; in this embodiment the connection means and over-torque indication means are incorporated into a drilling jar but the skilled person will realise that it's use is not limited to drilling jars as it will also have other applications, such as virtually any tool or tubular where a connection between tubular members may be required e.g. accelerators, drill pipe, flow circulation tools, shock tools, thrusters and bumper subs etc. and any other suitable Bottom Hole Assembly (BHA) tools.

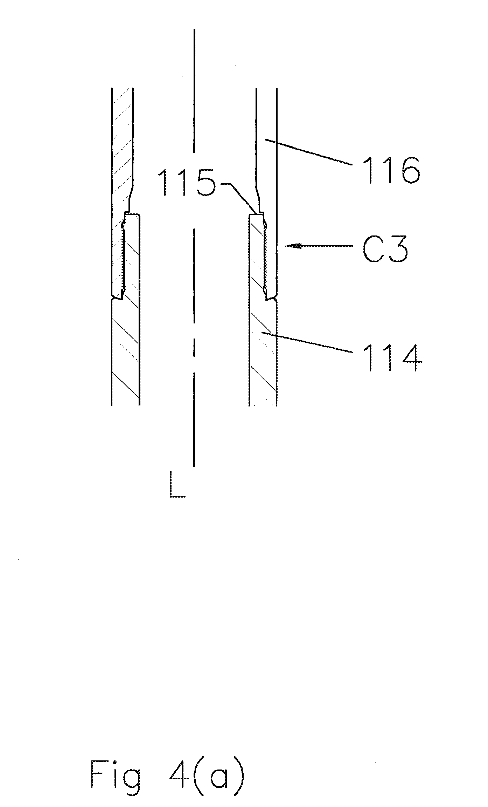

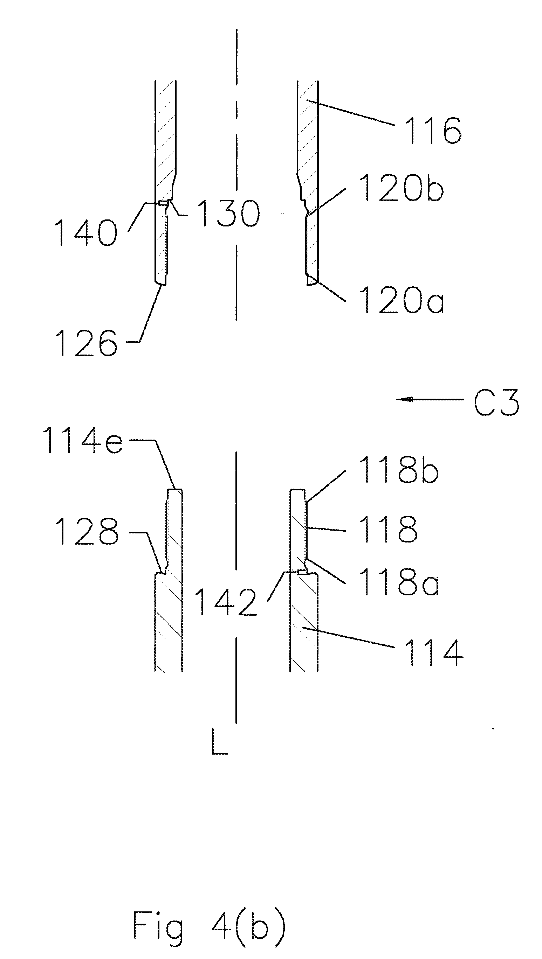

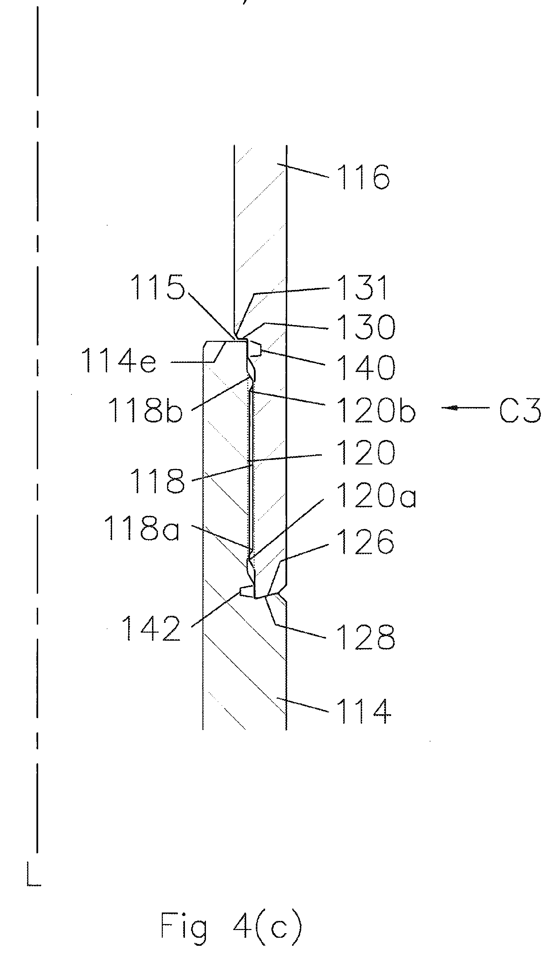

A first example to be described of a connection means incorporating an over-torque indication means is shown in Fig. 4A, 4B and in more detail in Fig. 4C which shows that the connection means C3 comprises an inner or male pin 114 which when connected resides within an outer or female box 116. A threaded portion 118 is provided on the outer circumference of the pin 114 where the threaded portion 118 comprises one or more helical threads formed upon the outer circumference of the pin 114 and which extend uninterrupted from one end 118A of the pin 114 relatively close to a load bearing shoulder 128 to another end 118B relatively close to the in-use uppermost end 114E of the pin 114 and is/are formed such that it/they co-operate with a corresponding threaded portion 120 formed on the inner circumference of the box 116. The threaded portion 120 also comprises one or more helical threads having the same pitch and a corresponding form to that of the threaded portion 118, where the threaded portion 120 extends uninterrupted from one end 120A of the box 116 relatively close to a load bearing shoulder 126 to another end 120B relatively close to the in-use uppermost end of the box 116.

The threaded portions 118, 120 typically comprise a V-shaped profile but could, in alternative embodiments, comprise square form, buttress, trapezoidal or acme type threads.

The threaded portions 118 and 120 are at or near parallel with the longitudinal axis L of the apparatus upon which the connection means C3 is provided and thus are referred to as parallel threads (as opposed to tapered threads commonly used, for instance, in drill pipe connections). The pin 114 has a flat face 114E perpendicular to the longitudinal axis L on its longitudinally outermost or in use uppermost end face (i.e. the leftmost portion of the pin shown in Fig. 4C)

Pin 114 also has a box receiving shoulder 128 which is distal of the flat face end 114E and which is located radially outer and longitudinally inner of the thread 118, where the shoulder 128 will provide a primary load bearing shoulder surface as will be described subsequently into which the majority of the rated torque is loaded when screwing the connection C3 together. The shoulder 128 is angled with respect to the perpendicular axis to the longitudinal axis L of the male pin 114 at approximately 15 degrees, from radially innermost to outermost, toward the rest of the pin 114 (i.e. the rest of the pin 114 to the left of the shoulder 128) and so is angled, from radially innermost to outermost, toward the parallel thread 118.

Accordingly, the thread 118 is located radially and longitudinally between the shoulder 128 and the flat face 114E and extends in an uninterrupted manner for the majority of the distance therebetween.

The box 116 has a single tapered face 126 which provides a primary shoulder surface and which is angled with respect to an axis perpendicular to the longitudinal axis L of the outer female box 116. The tapered face 126 is angled at approximately 15 degrees, from radially innermost to outermost, toward the rest of the outer female box 116 (i.e. the rest of the box 116 to the left of the tapered face 126) and so is angled, from radially innermost to outermost, toward the parallel thread 120 by substantially the same angle as that of the box receiving shoulder 128.

The box 116 also has over-torque indication means in the form of a radially inwardly projecting shoulder 130 which is distal of the tapered face 126 and which is located radially and longitudinally inner of the female thread 120 and which will in normal use be arranged to be slightly spaced apart from the pin flat face end 114E such that there is a gap 115 visible therebetween. The radially innermost corner of the over-torque indication shoulder 130 is cut away such that there is a tapered face 131 instead and this provides the advantage to an operator that they can more easily view, by looking down the throughbore along the longitudinal axis L from the appropriate end of the tool (such that that end provides a viewing point) whether there is a visible gap 115 or not as will be described subsequently.

Accordingly, the thread 120 is located radially and longitudinally between the tapered face 126 and the over-torque indication shoulder 130 and extends in an uninterrupted manner for the majority of the distance therebetween.

As shown in Fig. 1D, the connection means C3 is provided at both ends of a lock housing 26 of a drilling jar. The lock housing 26 comprises a pin 114 and box section 116 which respectively connect to a box and pin section in accordance with the first aspect of the present invention of another component of the drilling jar as will be described subsequently.

Referring to Fig. 4C, pin 114 is screwed into the box section 116 when the downhole tool is assembled and threads 120 and 118 co-operate to cause tapered face 126 of the box 116 to abut against box receiving shoulder 128 which thereby provide a primary (external of the thread) shoulder junction. This creates a metal to metal seal between the tapered face 126 and the shoulder 128 and also provides a primary shoulder between the pin 114 and box 116 into which torque can be delivered and stored.

The length of the pin 114 and the box 116, and particularly the distance between flat face end 114E and over-torque indication shoulder 130 are carefully arranged such that there is a visible gap 115 therebetween when the connection means C3 is coupled together up to the rated torque for safe operation as predetermined by the manufacturer. The visible gap 115 is in the region of 0.5 mm to 2mm depending upon the diameter of the tool where a smaller diameter tool will typically require a gap toward the larger end of the aforementioned range due to the additional stretch it will experience in use.

Accordingly, if the connection has been made up correctly to the rated torque by the user of the downhole tool then the visible gap 115 is present and can be viewed when the downhole tool is returned to the manufacturer for stripping down - the manufacturer operator will look down the throughbore of the downhole tool and will see the visible gap 115. However, if the connection means C3 has been over-torqued in the that too much torque has been supplied into the connection means C3 then the pin 114 and box 116 will be over-stretched and thus the gap 115 will no longer be visible because the flat face end 114E will touch the over-torque indication shoulder 130 and the manufacturer operator will see that the flat face end 114E is touching the over-torque indication shoulder 130 and thus will know that the connection means C3 has been over-torqued and therefore can decide whether the connection means C3 is to be discarded or whether it can be reused again upon further investigation.

When the drill string is compressed when, for example, downward jarring is required (or tensioned when, for example, upward jarring is required) pin 114 is prevented from diving outwardly (away from the longitudinal axis L) due to a support means in the form of support ledge 140 on the box section 116, where the support ledge 140 is arranged to lie on an axis substantially parallel and co-axial to the longitudinal axis L of the female box section 116. As shown in Fig. 4C, the support ledge 140 is arranged radially outwardly of and longitudinally outwardly of the over-torque indication shoulder 130 and is therefore located radially inwardly of and longitudinally inwardly of the female thread 120.

Box section 116 is prevented from splaying outwardly away from the longitudinal axis L of the apparatus due to the taper on wall 126 and shoulder 128. The box 116 is also prevented from diving inwardly (toward longitudinal axis L) due to a support ledge 142 on the pin section 114. As shown in Fig. 4C, the support ledge 142 is arranged radially inwardly of and longitudinally outwardly of the male shoulder 128 and is therefore located radially outwardly of and longitudinally inwardly of the male thread 118.

This provides a very secure joint which will withstand high torsional forces without the pin 114 or box 116 sections splaying or diving inwardly/outwardly since the combined effect of the support ledges 140, 142 and tapered surfaces 126, 128 substantially prevents movement of the male pin 114 and female box 116 in the radial direction. The joint created by the connection means C3 also discourages unintentional backing off (i.e. unscrewing) of the components of the apparatus upon which the connection means C3 is provided since a large rotational force would be required in order to overcome the friction between the primary external shoulder joint 126; 128 (face 126 and wall 128) once the desired make up torque has been applied to the connection means C3.

The parallel arrangement of threaded portions 118 and 120 allow a secure connection to be created between two tubulars whilst using a minimal amount of borehole space/radial distance i.e. the joints do not encroach on the internal bore more than absolutely necessary since no taper is required on the threaded portions 118 and 120.

In addition, and importantly, the connection means and visible gap 115 (or more correctly the lack thereof) provides an indication of over torqueing or over-stretching of the pin 114 and box 116 sections (which often occurs in conventional single shoulder screw threaded pin and box joints) occurring both during connection of the tubulars and during operation of the drill string.

The jar apparatus shown in Figs. 1A to 1F is provided with further embodiments of connections means C1, C2 and C4 in accordance with the first aspect of the present invention, each of which have a similarly tapered primary shoulder joint arrangement and similar threaded portions which are substantially parallel to the longitudinal axis L of the jar apparatus.

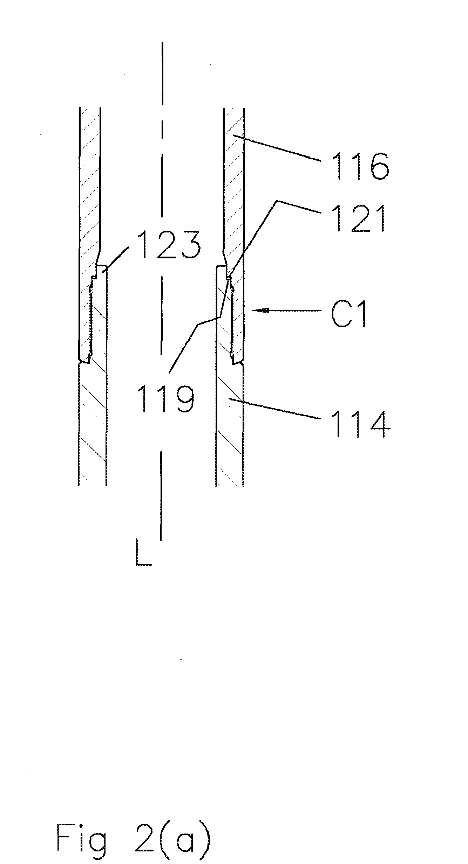

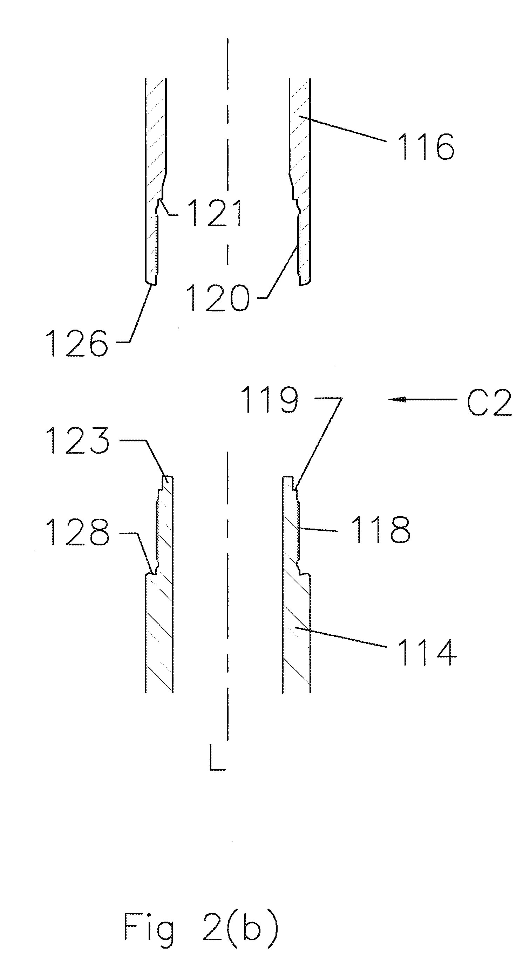

The similarities between the connection means C1, C2 and C4 and the previously described C3 will not be further described but differences therebetween will now be pointed out. Connection means C1 as shown in Figs. 2A and 2B does not comprise an over-torque indication shoulder but does comprise a pair of stop shoulders 119, 121 where radially outwardly projecting stop shoulder 119 is formed on the outer circumference of the pin 114 just outer of the outermost end 118b of the thread 118 thereon and radially inwardly projecting stop shoulder 121 is formed on the inner circumference of the box 116 just inner of the innermost end 120b of the thread 120 thereon. The connections means C1 is arranged such that there is a gap between the stop shoulders 119, 121 if the connection means C1 is torqued up to but not beyond it's rated torque. As can be seen in Figs. 2A and 2B, the pin 114 further comprises a nose 123 at it's very end which will lie over the inner circumference of the box 116 when the pin 114 and box 116 are screwed together. The nose will therefore obscure whether there is a gap present between the pair of stop shoulders 119, 121 of connection means C1 if an operator looks down the throughbore of the tool.

However, because the tool further comprises the connection means C3 (or C4 as will be subsequently described), the operator will know if the connection means C1 has been over-torqued and hence over-stretched by simply viewing or otherwise measuring or observing the gap 115 (or lack thereof) in the connection means C3 (or C4) because each connection C1, C2, C3 and C4 in the tool will experience the same torque downhole and hence will be over-torqued by the same amount. Furthermore, the pair of stop shoulders 119, 121 of connection means C1 will butt together and stop or at least abate further over-stretching.

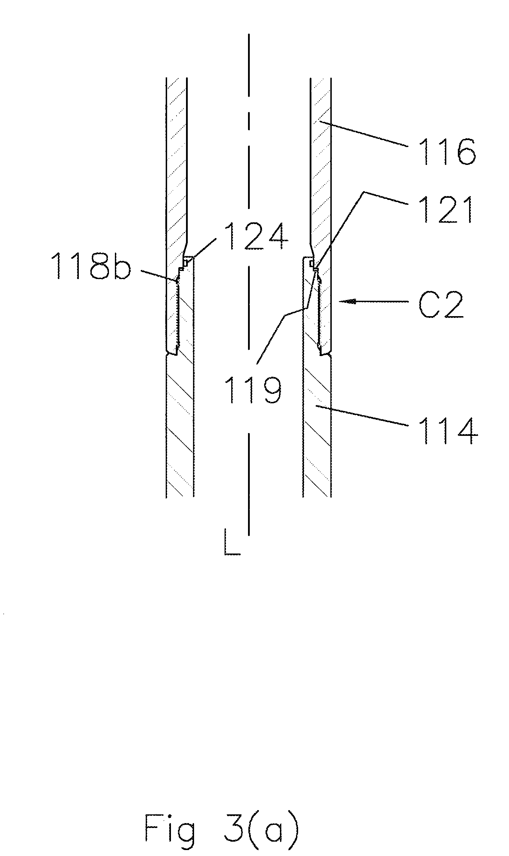

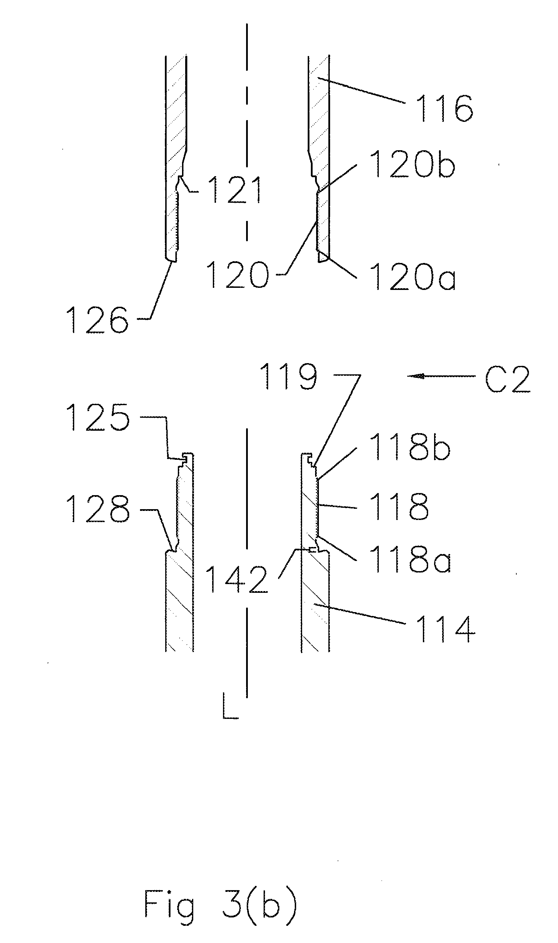

Fig. 3A shows another connection means C2 which does not comprise an over-torque indication shoulder; connection means C2 is similar to the embodiment C1 as shown in Figs. 2A and 2B in that the connection means C2 also comprises a pair of stop shoulders 119, 121. However, the connection means C2 further comprises a seal 124 in the form of an O-ring seal 124 located in a circular groove 125 formed on the outer circumference of the pin 114 at a location in between the thread 118B end and the flat face end 114E. Accordingly, the connection means C2 not only comprises a metal to metal seal between the tapered faces 126 and 128 but also comprises a fluid tight O-ring seal 124 on the radially inner most end of the pin 114.

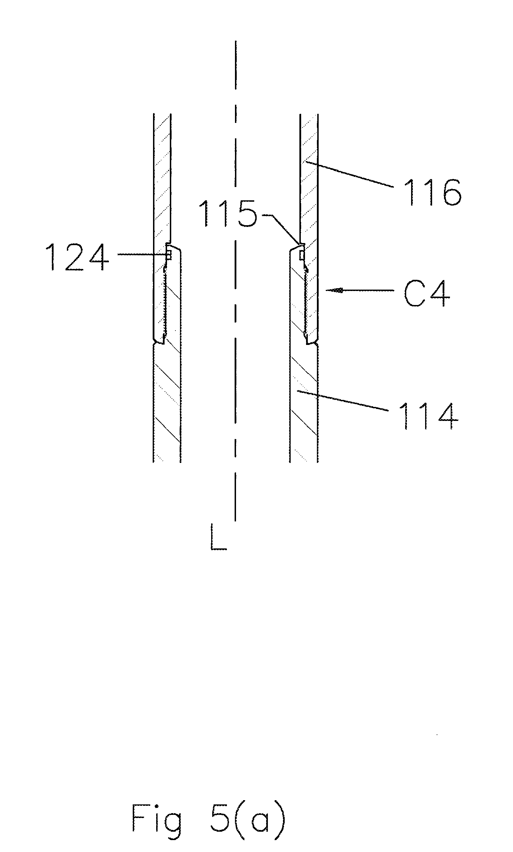

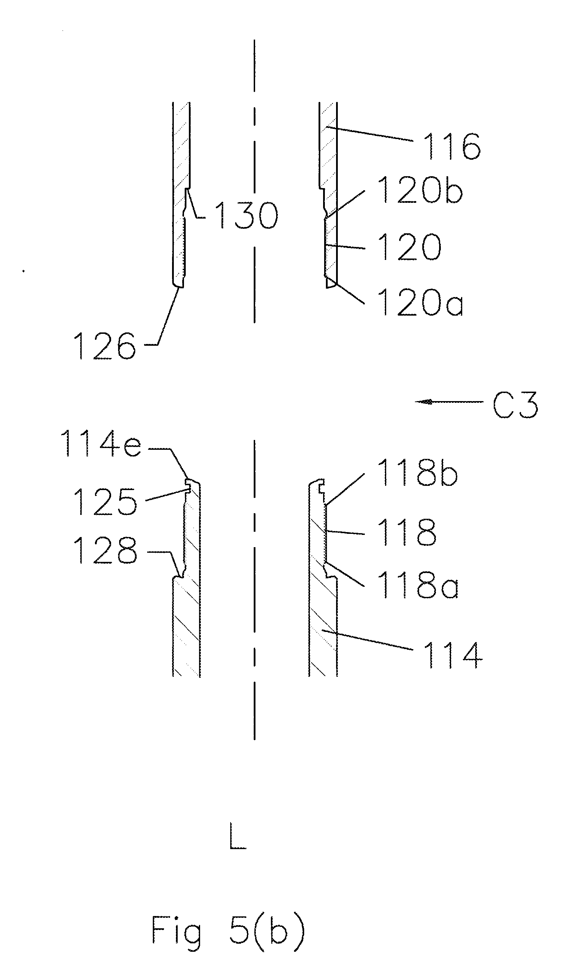

Figs. 5A and 5B show a further embodiment of a connection means C4 in accordance with the first aspect of the present invention and which also comprises an O-ring seal 124 provided in a circular groove 125 similar to that of connection means C3, but connection means C4 of Figs. 5A and 5B comprises an over-torque indication shoulder 130 and therefore also comprises a visible gap 115 if the connection means C4 is made up to the correct rated torque but the absence of the visible gap 115 provides an indication to an operator that the connection means C4 has been over-torqued.

Use of the connection means C1, C2, C3 and C4 in the drilling jar of Figs. 1A to 1F will now be described, though as previously stated the connection means is not limited to use on a drilling jar and indeed it may be used on virtually any tool or tubular where a connection between tubular members may be required e.g. accelerators, drill pipe, flow circulation tools, shock tools, thrusters and bumper subs etc. and any other suitable BHA tools.

When viewed in conjunction and in combination with one another, Figs.1A to 1F show a drilling jar as comprising an internal body member or mandrel 10 surrounded by an external body member or housing 12. The internal mandrel 10 is arranged such that it may move axially with respect to the external housing 12 when it is required to do so.

The internal mandrel 10 is a substantially tubular member which spans the majority of the length from the upper to the lower end of the jar apparatus.

The internal mandrel 10 comprises an uppermost connecting mandrel 14 which is connected at its lower end to a meter mandrel 16, which leads on to a locking mandrel 18 that finally connects to a lowermost end mandrel 20.

The external housing 12 comprises an uppermost seal housing 22 connected to an impact housing 23 which leads on to a meter housing 24 connected to a lock housing 26 which connects to a lower seal housing 28 which finally connects to a lowermost connecting housing 30. The housings 22, 23, 24, 26, 28 and 30 are connected via one of the connection means C1, C2, C3, or C4 in accordance with the first aspect of the present invention as shown in Figs. 1A to 1F.

The uppermost connecting mandrel 14 of the internal mandrel 10 has a box section 34 provided with a standard tapered thread portion 36 which allows connection to a pin section of the lower end of an upper portion of the drill string (not shown). The outer circumference of the box section 34 decreases in diameter in order to allow the connecting mandrel 14 to enter the external housing 12. Such box sections are common in the industry and suitable box sections include the HT-50 and XT56 connections provided by Grant Prideco and the WT-58 provided by Hydril. The mandrel 14 continues along the internal bore of the housing 12 until it reaches an indented portion 38 which comprises an arrangement of longitudinally extending and circumferentially spaced grooves which telescopically engage with internally projecting splines 39 mounted on the uppermost seal housing 32 to prevent rotation occurring between the internal mandrel 10 and external housing 12. At the lower portion of the connecting mandrel 14 a double headed hammer 40 is secured to the outer circumference of the mandrel 14. The hammer comprises a collar 40 which has upper 42 and lower 44 impact surfaces and is manufactured such that it may be removed for maintenance or replacement.

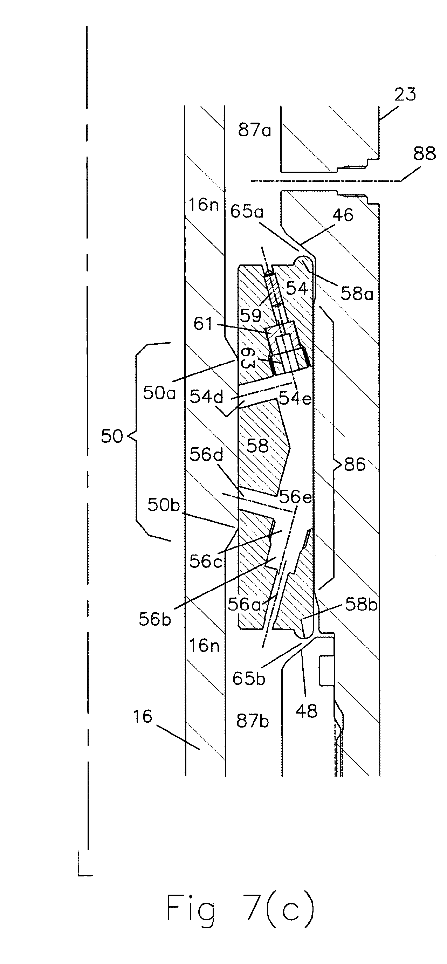

Referring to Figs. 1C and 7C, the meter mandrel 16 has a raised diameter portion 50 formed on the mandrel 16. Situated between an upper shoulder 46 and a lower shoulder 48 of the external housing 12 is a one piece valve housing 58 into which is located an upper meter valve 54 and a lower meter valve 56, where the valve housing 58 is in accordance with the second aspect. Each valve 54, 56 is a one way fluid flow restrictor. Many suitable meter valves 54, 56 are widely available; however, one-way valves such as the Jeva Jet™ provided by The Lee Company, USA are particularly suitable.

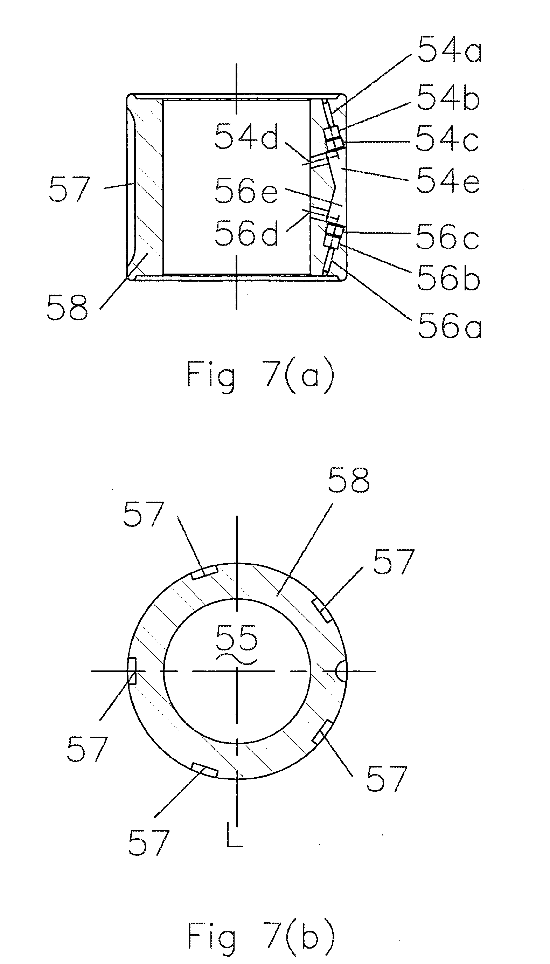

The valve housing 58 as shown in Figs. 7A and 7B is preferably a one-piece housing as this will be most rigid because the valve housing 58 requires to withstand very high pressures and loads. However, in alternative embodiments, it could be that the valve housing was formed in two or more parts that are rigidly coupled together by means of e.g. screw threads or a rigid frame, etc. that ensures that the upper 54 and lower 56 meter valves (and the bypass channels 57 as will be subsequently described) are aligned.

The valve housing 58 is preferably generally cylindrical and comprises a throughbore 55 which has a diameter dimensioned to be a close sliding fit with the raised diameter portion 50 of the mandrel 16, in that the through bore 55 is arranged to be just slightly larger than the outer diameter of the raised diameter portion 50 such that the mandrel 16 and more specifically the raised diameter portion 50 can move within the throughbore 55 but no hydraulic oil can pass between the raised diameter portion 50 and the inner circumference of the valve housing 58 when they are in contact.

A plurality of bypass channels 57 (five are shown in Fig. 7B) are provided around the outer circumference of the valve housing 58 and are preferably equi-spaced around the circumference. However, in alternative embodiments, it could be that only one bypass channel 57 is provided.

Each meter valve 54, 56 actually comprises five separate parts as will now be described. Each meter valve 54, 56 firstly comprises a restrictor jet housing 54A, 56A into which a one way fluid flow restrictor jet 59 such as a Lee Jeva Jet(™) 59 is inserted. A filter 61 is then inserted into a filter housing 54B, 56B and a retaining nut 63 is then screwed into a nut housing 54C, 56C in order to secure the restrictor 59 jet and the filter 61 within the respective housings 54A , 54B.

Fig. 7C shows one fluid flow restrictor 59, filter 61 and retaining nut 63 in position within the upper meter valve 54 and another set of one way fluid flow restrictor (not shown), filter (not shown) and retaining nut (not shown) would also be provided for the lower meter valve 56.

As can be seen most clearly in Fig. 7C, the centre line of the drilling made for the restrictor 56A and filters 56B and nut 56C are drilled at an angle to the longitudinal axis of the valve housing 58 (albeit that the longitudinal axis of the drilling 56A is not co-axial with the longitudinal axis of the drillings for 56B and 56C) and the reason for this is that so that the restrictor 59, filter 61 and retaining nut 63 can all be inserted into the respective housings 56A, 56B, 56C from the drilled out area 56E and so that they can be drilled out from above, but still be provided within the relatively narrow side wall of the valve housing 58. Bypass ports 54D and 56D are provided for the respective upper 54 and lower 56 meter valves and will allow hydraulic fluid to flow therethrough when an operator is resetting the tool for the next jarring operation as will be described subsequently.

Referring to Fig. 1D, the locking mandrel 18 has circumferentially arranged locking grooves or rings 60 formed on its outer surface which are adapted to selectively coincide with inwardly projecting locking teeth 62 provided on a locking block 64. A plurality of, such as six, locking blocks 64 are equi-spaced around the annulus between the internal mandrel 10 and external housing 12 in a cage like structure and are bounded at each upper and lower end by a respective inwardly facing tapered collar 70. The teeth 62 are held in the grooves 60 due to an inward force created by the action of compression springs 66 and pre-load spring 68 acting to push the tapered collars 70 toward one another. The force exerted on the locking block 64 by the compression springs 66 can be varied by either screwing in or out an adjuster 72 which increases or decreases (as desired) the inwardly acting force on the locking block 64 due to the action of the tapered collars 70. The lock housing 26 has a shoulder 92 which provides a point against which the compression spring arrangement 66 may act. The plurality of locking blocks 64 provided around the circumference of the locking mandrel 18 are each held apart by a circumferential spacer plate (not shown) and rods 73. This prevents the locking blocks 64 from falling to one side of the jar apparatus when e.g. the jar apparatus is placed on its side on the rig for storage, or when the apparatus is used in a highly deviated well.

The end mandrel 20 (shown in Fig. 1E) provides additional weight to be used in the jarring process.

The impact housing 23 is provided with an internal shoulder 84 which is positioned such that it provides an anvil 84 against which the lower impact surface 44 of the hammer 40 may impact. A shoulder 102 is provided on the seal housing 22 to provide an anvil against which the upper impact surface 42 of the hammer 40 may impact.

The meter housing 23 (best shown in Fig. 7C) has a restricted portion 86 which projects slightly inwardly from the internal circumference of the meter housing 23. The restricted portion 86 is positioned such that it coincides with the bypass channels of the valve housing 58. The chamber 87 created between the meter housing 24 and the meter mandrel 16 is filled with hydraulic fluid which is retained within this chamber due to the presence of plugs (not shown) in ports 88 and 89, and end seals 91 and 93 provided in the chamber as seen in Figs. 1B and 1C.

The lower seal housing 28 provides a fluid chamber 74 which has a moveable balance piston 94 located at an end thereof and which contains hydraulic fluid. A plug 96 is also provided in the seal housing 28. This arrangement prevents any pressure differential from building up across the wall of apparatus by providing a hydraulic compensation system.

The lowermost connecting housing 30 has a pin section 98 provided with a standard tapered thread portion 100 which allows connection to a box section of the upper end of a lower portion of the drill string (not shown).

In operation, the jar apparatus of Figs. 1A to 1F is installed in the drill string prior to inserting the drill string downhole. In the event that the drill string becomes stuck downhole due to, for example, the drill bit becoming lodged in the formation being drilled, the jar apparatus can be brought into operation by the operator in order to free the drill bit from the formation.

Depending upon the nature of the jam between the drill bit and the formation, the operator may chose to jar the apparatus (and hence the drill string) in the upward or the downward direction, or a combination of both alternately.

Starting from the neutral position, as shown in Figs. 1A to 1F, in order to jar the drill string in the upward direction, the upper portion of the drill string is pulled upwardly by the operator via the drilling rig (not shown). This exerts an upward force on the internal mandrel 10 with respect to the external housing 12 (which is prevented from moving upwardly due to the stuck drill string (not shown)). When the upward force is greater than the lock setting force (which could be in the region of many tonnes) set by the compression springs 66, the locking block 64 moves outwardly until the locking teeth 62 disengage from the locking grooves 60. In this regard, the highly tapered surfaces of the tapered collars 70 result in a relatively large force being required to move the locking block 64 outwardly; however, once the locking block 64 has moved outwardly it is held between shallow tapered surfaces which gently push the locking block 64 inwardly due to the action of the compression springs 66. This arrangement has the great advantage that it reduces friction on the locking mandrel 18 since the locking blocks 64 around the circumference of the locking mandrel 18 only grip the locking mandrel 18 lightly as the locking mandrel moves axially along the jar apparatus. With the locking blocks 64 moved outwardly, the internal mandrel 10 is now able to move with respect to the external housing 12.

As can be seen in Fig. 7C most clearly, the length of the valve housing 58 is slightly shorter than the longitudinal gap between shoulders 46 and 48 in which it sits and this is shown as gaps 65A, 65B. These gaps 65A, 65B mean that there is a little longitudinal play available to the valve housing 58 such that the upward movement of the internal mandrel 10 will move the valve housing 58 upwards to close the gap 65A (and hence lengthen the gap 65B) such that the rounded upper end 58A butts against the shoulder 46. The valve housing 58 can therefore no longer move upwards due to the close fit between it and the raised diameter portion and therefore the raised diameter portion 50 will now move upwards with respect to the stationary valve housing 58. The continued upward movement of the meter mandrel 16 will keep the valve housing 58 and in particular the upper end 58A pinned against the shoulder 46. However, continued upward movement of the meter mandrel 16 effectively reduces the volume in chamber 87B (and increases the volume in chamber 87A) which means that the hydraulic fluid contained in fluid chamber 87B is forced to travel into the fluid chamber 87A. However, the hydraulic fluid cannot flow through the upper half of the bypass channels 57 because that pathway is blocked by the contact between upper end 58A and shoulder 46. Accordingly, the hydraulic fluid will pass through gap 65B, along the lower half of the bypass channels 57 and into the drilled out areas 56E, 54E at which point it will then slowly pass through the upper meter valve 54 and in particular the flow restrictor 59 that is located in the restrictor housing 54A in order to equalise the pressure differential between the right chamber 87B and the left chamber 87A. As will be understood by the skilled reader, forcing hydraulic fluid through a fluid meter restrictor in this manner requires very large forces to be exerted on the meter 54 by the shoulder 46. This force is provided by using the drilling rig to pull up on the internal mandrel 10 via the drillstring. The force on the meter 54 must be maintained until the lower end 50B of the raised diameter portion 50 has cleared the upper internal end of the valve housing 58. At this point, the hydraulic fluid (which always tends to take the least path of resistance) will be able to freely pass through the annular gap between the normal outer diameter 16N of the meter mandrel 16 and the inner diameter of the valve housing 58. At this point, the valve housing 58 will tend to reintroduce the gap 65A and the fluid can also pass through the gap 65B, along the whole length of the bypass channels 57 and through the gap 65A and this additional fluid flow path reduces the friction between the hydraulic fluid and the drilling jar when it is about to fire which is very desirable. Accordingly, the sudden decrease in force required to move the mandrel 10 upwardly results in the mandrel 10 accelerating upwardly at high speed.

When the upper impact surface 42 of the double headed hammer 40 reaches the inwardly protruding shoulder 102 the inner mandrel 10 is stopped due to the impact between surface 42 and hammer 40. This causes the momentum of the inner mandrel 10 to be transferred to the outer housing 12. In this regard, the weight provided by the lowermost end mandrel 20 acts to increase the force exerted on the outer housing 12 due to the impact. The transfer of force to the outer housing 12 assists removal of the stuck drill bit from the formation.

Starting from the neutral position as shown in Figs. 1A to 1F, in order to jar the drill string in the downward direction, the upper portion of the drill string is pushed downwardly by the operator via the drilling rig (not shown). This exerts a downward force on the internal mandrel 10 with respect to the external housing 12 (which is prevented from moving downwardly due to the stuck drill bit (not shown)). In a similar way to that previously described for the upward movement of the drill string, when the downward force is greater than the predetermined force set by the compression springs 66, the locking block 64 allows movement of the internal mandrel 10 with respect to the external housing 12. The downward movement of the internal mandrel 10 pushes the valve housing 58 downward due to the close fit between it and the raised diameter portion 50 such that the gap 65B is closed and the lower end 58B butts against the shoulder 48. This causes the hydraulic fluid in the left hand chamber 87A to flow through the gap 65A, along the upper half of the bypass channels 57 and into the drilled out areas 54E, 56E at which point it will then slowly pass through the lower meter valve 56 and in particular pass through the one way fluid flow restrictor 59 located in the restrictor housing 56A which in turn builds up compression in the inner mandrel 10 and hence the drill string until the upper end 50A of the enlarged diameter portion 50 clears the lower end of the valve housing 58. Accordingly, the hydraulic fluid in the left hand chamber 87A will slowly pass into the right hand chamber 87B through the lower restrictor 59 in order to equalise the pressure differential therebetween. However, once the end 50A has cleared the valve housing 58, the hydraulic fluid will once again be able to freely pass both around the outer diameter of the valve housing 58 (through the upper gap 65A, whole length of the bypass channels 57 and lower gap 65B) and also around the inner diameter of the valve housing 58 through the annular gap between it and the normal outer diameter 16N of the meter mandrel 16. The sudden decrease in force required to move the mandrel 10 downward results in the mandrel accelerating downwardly at high speed.

When the lower impact surface 44 of the double headed hammer 40 reaches the inwardly protruding shoulder of anvil 84, the inner mandrel 10 is stopped due to the impact between surface 44 and anvil 84. This causes the momentum of the inner mandrel 10 to be transferred to the outer housing 12. Again, the weight provided by the lowermost end mandrel 20 acts to increase the force exerted on the outer housing 12 due to the impact. The transfer of force to the outer housing 12 assists removal of the stuck drill bit from the formation.

It should be noted that once the jar apparatus has been operated in either the upward or downward direction, the operator can return the enlarged portion 50 to the neutral position shown in Fig. 7C relatively easily because bypass ports 54D, 56D allow the majority of the hydraulic fluid to bypass the one way fluid flow restrictors 59. Thereafter, the locking block 64 will engage with the locking grooves 60 on the internal mandrel when the mandrel reaches the neutral position. This effectively allows the jarring procedure to be restarted from the neutral position when desired.

Accordingly, the one piece valve housing 58 provides the benefit that the bypass channels 57 offer a straight path for the hydraulic fluid to rapidly flow along in the important period between the release of the inner mandrel 10 from the metering effect of the valve housing 58 until the short moment later when the hammer 42, 44 hits either anvil 102, 84.

It should be noted that the outer circumference of the tubular members described herein, whilst nearly always being circular in cross section, need not be so since they could have, for instance, a square, hexagonal or other cross section, particularly in the areas in between the connection means C1, C2, C3 and C4.

## Claims

1. A bottom hole assembly tool connection apparatus comprising a male screw threaded connection provided on a first tubular member and a female screw threaded connection provided on a second tubular member which, when connected in use, make up a connection in a bottom hole assembly tool, wherein the male screw threaded connection comprises a pin member (114) having an end for insertion into the female screw threaded connection and a screw thread (118) formed on an external surface thereof, and wherein the female screw threaded connection comprises a box member (116) having an end into which the male screw threaded connection is insertable and a screw thread (120) formed on an internal surface thereof,
wherein the screw threads (118,120) are single, un-interrupted and parallel screw threads and are arranged with a longitudinal axis substantially parallel to the longitudinal axis of the respective tubular member,
and wherein the pin member (114) comprises a box receiving shoulder (128) which is distal of a longitudinally outermost flat face end (114E) and located radially outer and longitudinally inner of corresponding thread (118), and the box member (116) comprises a tapered face (126) formed at an external end thereof and located radially and longitudinally outer of corresponding thread (120), the box receiving shoulder (128) of the pin member (114) being arranged to abut against the tapered face (126) of the box member (116) in use to provide a primary shoulder junction into which the majority of torque can be delivered and stored when connected in use; **characterized in that** the connection apparatus further comprises an over-torque indication means (130,114e) comprising a radially inwardly projecting shoulder (130) of the box member (116) which is located radially and longitudinally inner of the corresponding thread (120) and distal of the tapered face (126) and which is arranged to be spaced apart from the flat face end (114E) such that there is a visible gap (115) therebetween when the connection is correctly coupled at a predetermined torque and adapted to make contact with the flat face end (114E) when the connection is coupled at a higher torque than the predetermined torque;
and wherein the internal diameter of one of the shoulder (130) and flat face end (114E) is greater than the internal diameter of the other of the shoulder (130) and flat face end (114E), such that an operator can view said contact from a throughbore of the tool and ascertain if the male screw threaded connection (118) has been over-torqued into the female screw threaded connection (120).

2. A bottom hole assembly tool connection apparatus according to claim 1, wherein the visible gap (115) is in the region of 0.5mm to 2mm.

3. A bottom hole assembly tool connection apparatus according to claim 1 or 2, wherein the box receiving shoulder (128) of pin member (114) is angled with respect to a perpendicular axis to the longitudinal axis (L) of the pin member.

4. A bottom hole assembly tool connection apparatus according to claim 3, wherein the box receiving shoulder (128) is angled at approximately 15 degrees from radially innermost to outermost toward corresponding thread (118).

5. A bottom hole assembly tool connection apparatus according to claim 3 or 4, wherein the tapered face (126) of box member (116) is angled with respect to a perpendicular axis to the longitudinal axis (L) of the box member.

6. A bottom hole assembly tool connection apparatus according to claim 5, wherein the tapered face (126) is angled at approximately 15 degrees from radially innermost to outermost toward corresponding thread (120).

7. A bottom hole assembly tool connection apparatus according to any preceding claim, wherein the internal diameter of the box receiving shoulder (130) of the female box member (116) is greater than the internal diameter of the male pin member (114).

8. A bottom hole assembly tool connection apparatus according to any preceding claim, wherein a radially innermost corner of the inwardly projecting shoulder (130) of the box member (116) is cut away to provide a tapered face (131).

9. A method of indicating over-torque in a screw threaded connection used to connect a male screw threaded connection provided on a first tubular member to a female screw threaded connection provided on a second tubular member to make up a connection in a bottom hole assembly tool, wherein the male screw threaded connection comprises a pin member (114) having an end for insertion into the female screw threaded connection and a screw thread (118) formed on an external surface thereof, and wherein the female screw threaded connection comprises a box member (116) having an end into which the male screw threaded connection is insertable and a screw thread (120) formed on an internal surface thereof,
wherein the screw threads (118,120) are single, un-interrupted and parallel screw threads and are arranged with a longitudinal axis substantially parallel to the longitudinal axis of the respective tubular member,
and wherein the pin member (114) comprises a box receiving shoulder (128) which is distal of a longitudinally outermost flat face end (114E) and located radially outer and longitudinally inner of corresponding thread (118), and the box member (116) comprises a tapered face (126) formed at an external end thereof and located radially and longitudinally outer of corresponding thread (120), the box receiving shoulder (128) of the pin member (114) being arranged to abut against the tapered face (126) of the box member (116) in use to provide a primary shoulder junction into which the majority of torque can be delivered and stored when connected in use; **characterized in that** the method comprises;
providing a radially inwardly projecting shoulder (130) of the box member (116) located radially and longitudinally inner of the corresponding thread (120) and distal of the tapered face (126) and which is arranged to be spaced apart from the flat face end (114E) such that there is a visible gap (115) therebetween when the connection is correctly coupled at a predetermined torque and adapted to make contact with the flat face end (114E) when the connection is coupled at a higher torque than the predetermined torque;
and wherein the internal diameter of one of the shoulder (130) and flat face end (114E) is greater than the internal diameter of the other of the shoulder (130) and flat face end (114E), such that an operator can view said contact from a throughbore of the tool and ascertain if the male screw threaded connection (118) has been over-torqued into the female screw threaded connection (120);
torqueing the male screw threaded connection (118) into the female screw threaded connection (120); and
viewing the gap (115) from a throughbore of the tool and ascertaining if the male screw threaded connection (118) has been over-torqued into the female screw threaded connection (120).

10. A method of indicating over-torque in a screw threaded connection according to claim 9, wherein the internal diameter of the shoulder (130) of the female box member (116) is greater than the internal diameter of the end portion (114E) of the male pin member (114).

## Patentansprüche

1. Eine Verbindungsvorrichtung für ein Bohrgarniturwerkzeug, die eine auf einem ersten röhrenförmigen Element bereitgestellte Außengewindeverbindung und eine auf einem zweiten röhrenförmigen Element bereitgestellte Innengewindeverbindung beinhaltet, die, wenn im Gebrauch verbunden, eine Verbindung in einem Bohrgarniturwerkzeug ausmachen, wobei die Außengewindeverbindung ein Stiftelement (114), das ein Ende zum Einsetzen in die Innengewindeverbindung aufweist, und ein auf einer externen Oberfläche davon gebildetes Schraubengewinde (118) beinhaltet, und wobei die Innengewindeverbindung ein Büchsenelement (116), das ein Ende, in das die Außengewindeverbindung eingesetzt werden kann, aufweist, und ein auf einer internen Oberfläche davon gebildetes Schraubengewinde (120) beinhaltet,
wobei die Schraubengewinde (118,120) einzelne, ununterbrochene und parallele Schraubengewinde sind und so eingerichtet sind, dass eine Längsachse zu der Längsachse des entsprechenden röhrenförmigen Elements im Wesentlichen parallel ist, und wobei das Stiftelement (114) eine Büchsenaufnahmeschulter (128) beinhaltet, die zu einem in Längsrichtung äußersten flachen Flächenende (114E) distal ist und sich radial außerhalb und in Längsrichtung innerhalb des entsprechenden Gewindes (118) befindet, und das Büchsenelement (116) eine angeschrägte Fläche (126) beinhaltet, die an einem externen Ende davon gebildet ist und sich radial und in Längsrichtung außerhalb des entsprechenden Gewindes (120) befindet, wobei die Büchsenaufnahmeschulter (128) des Stiftelements (114) eingerichtet ist, um im Gebrauch gegen die angeschrägte Fläche (126) des Büchsenelements (116) zu stoßen, um eine primäre Schulteranschlussstelle bereitzustellen, in die der größere Teil eines Anzugsdrehmoments abgegeben und gespeichert werden kann, wenn im Gebrauch verbunden; **dadurch gekennzeichnet, dass** die Verbindungsvorrichtung ferner ein Anzeigemittel (130, 114e) für ein übermäßiges Anzugsdrehmoment beinhaltet, das eine radial nach innen vorstehende Schulter (130) des Büchsenelements (116) beinhaltet, die sich radial und in Längsrichtung innerhalb des entsprechenden Gewindes (120) befindet und zu der angeschrägten Fläche (126) distal ist und die eingerichtet ist, um von dem flachen Flächenende (114E) beabstandet zu sein, so dass es eine sichtbare Lücke (115) dazwischen gibt, wenn die Verbindung korrekt mit einem vorgegebenen Anzugsdrehmoment gekoppelt wird, und angepasst ist, um einen Kontakt mit dem flachen Flächenende (114E) herzustellen, wenn die Verbindung mit einem höheren Anzugsdrehmoment als dem vorgegebenen Anzugsdrehmoment gekoppelt wird;
und wobei der interne Durchmesser eines von der Schulter (130) und dem flachen Flächenende (114E) größer als der interne Durchmesser des anderen von der Schulter (130) und dem flachen Flächenende (114E) ist, so dass ein Arbeiter den Kontakt aus einer Durchbohrung des Werkzeugs ansehen und ermitteln kann, ob die Außengewindeverbindung (118) in der Innengewindeverbindung (120) übermäßig angezogen wurde.

2. Verbindungsvorrichtung für ein Bohrgarniturwerkzeug gemäß Anspruch 1, wobei die sichtbare Lücke (115) in dem Bereich von 0,5 mm bis 2 mm liegt.

3. Verbindungsvorrichtung für ein Bohrgarniturwerkzeug gemäß Anspruch 1 oder 2, wobei die Büchsenaufnahmeschulter (128) des Stiftelements (114) in Bezug auf eine senkrechte Achse zur Längsachse (L) des Stiftelements abgewinkelt ist.

4. Verbindungsvorrichtung für ein Bohrgarniturwerkzeug gemäß Anspruch 3, wobei die Büchsenaufnahmeschulter (128) vom radial Innersten zum Äußersten zum entsprechenden Gewinde (118) hin um ungefähr 15 Grad abgewinkelt ist.

5. Verbindungsvorrichtung für ein Bohrgarniturwerkzeug gemäß Anspruch 3 oder 4, wobei die angeschrägte Fläche (126) des Büchsenelements (116) in Bezug auf eine senkrechte Achse zur Längsachse (L) des Büchsenelements abgewinkelt ist.

6. Verbindungsvorrichtung für ein Bohrgarniturwerkzeug gemäß Anspruch 5, wobei die angeschrägte Fläche (126) vom radial Innersten zum Äußersten zum entsprechenden Gewinde (120) hin um ungefähr 15 Grad abgewinkelt ist.

7. Verbindungsvorrichtung für ein Bohrgarniturwerkzeug gemäß einem vorhergehenden Anspruch, wobei der interne Durchmesser der Büchsenaufnahmeschulter (130) des empfangenden Büchsenelements (116) größer als der interne Durchmesser des einzusteckenden Stiftelements (114) ist.

8. Verbindungsvorrichtung für ein Bohrgarniturwerkzeug gemäß einem vorhergehenden Anspruch, wobei eine radial innerste Ecke der nach innen vorstehenden Schulter (130) des Büchsenelements (116) weggeschnitten ist, um eine angeschrägte Fläche (131) bereitzustellen.

9. Ein Verfahren zum Anzeigen eines übermäßigen Anzugsdrehmoments in einer Schraubengewindeverbindung, das genutzt wird, um eine auf einem ersten röhrenförmigen Element bereitgestellte Außengewindeverbindung mit einer auf einem zweiten röhrenförmigen Element bereitgestellten Innengewindeverbindung zu verbinden, um eine Verbindung in einem Bohrgarniturwerkzeug auszumachen, wobei die Außengewindeverbindung ein Stiftelement (114), das ein Ende zum Einsetzen in die Innengewindeverbindung aufweist, und ein auf einer externen Oberfläche davon gebildetes Schraubengewinde (118) beinhaltet, und wobei die Innengewindeverbindung ein Büchsenelement (116), das ein Ende, in das die Außengewindeverbindung eingesetzt werden kann, aufweist, und ein auf einer internen Oberfläche davon gebildetes Schraubengewinde (120) beinhaltet,
wobei die Schraubengewinde (118,120) einzelne, ununterbrochene und parallele Schraubengewinde sind und so eingerichtet sind, dass eine Längsachse zu der Längsachse des entsprechenden röhrenförmigen Elements im Wesentlichen parallel ist, und wobei das Stiftelement (114) eine Büchsenaufnahmeschulter (128) beinhaltet, die zu einem in Längsrichtung äußersten flachen Flächenende (114E) distal ist und sich radial außerhalb und in Längsrichtung innerhalb des entsprechenden Gewindes (118) befindet, und das Büchsenelement (116) eine angeschrägte Fläche (126) beinhaltet, die an einem externen Ende davon gebildet ist und sich radial und in Längsrichtung außerhalb des entsprechenden Gewindes (120) befindet, wobei die Büchsenaufnahmeschulter (128) des Stiftelements (114) eingerichtet ist, um im Gebrauch gegen die angeschrägte Fläche (126) des Büchsenelements (116) zu stoßen, um eine primäre Schulteranschlussstelle bereitzustellen, in die der größere Teil eines Anzugsdrehmoments abgegeben und gespeichert werden kann, wenn im Gebrauch verbunden; **dadurch gekennzeichnet, dass** das Verfahren Folgendes beinhaltet:
Bereitstellen einer radial nach innen vorstehenden Schulter (130) des Büchsenelements (116), die sich radial und in Längsrichtung innerhalb des entsprechenden Gewindes (120) befindet und zu der angeschrägten Fläche (126) distal ist und die eingerichtet ist, um von dem flachen Flächenende (114E) beabstandet zu sein, so dass es eine sichtbare Lücke (115) dazwischen gibt, wenn die Verbindung korrekt mit einem vorgegebenen Anzugsdrehmoment gekoppelt wird, und angepasst ist, um einen Kontakt mit dem flachen Flächenende (114E) herzustellen, wenn die Verbindung mit einem höheren Anzugsdrehmoment als dem vorgegebenen Anzugsdrehmoment gekoppelt wird;
und wobei der interne Durchmesser eines von der Schulter (130) und dem flachen Flächenende (114E) größer als der interne Durchmesser des anderen von der Schulter (130) und dem flachen Flächenende (114E) ist, so dass ein Arbeiter den Kontakt aus einer Durchbohrung des Werkzeugs ansehen und ermitteln kann, ob die Außengewindeverbindung (118) in der Innengewindeverbindung (120) übermäßig angezogen wurde;
Anziehen der Außengewindeverbindung (118) in der Innengewindeverbindung (120); und
Ansehen der Lücke (115) aus einer Durchbohrung und Ermitteln, ob die Außengewindeverbindung (118) in der Innengewindeverbindung (120) übermäßig angezogen wurde.

10. Verfahren zum Anzeigen eines übermäßigen Anzugsdrehmoments in einer Schraubengewindeverbindung gemäß Anspruch 9, wobei der interne Durchmesser der Schulter (130) des empfangenden Büchsenelements (116) größer als der interne Durchmesser des Endabschnitts (114E) des einzusteckenden Stiftelements (114) ist.

## Revendications

1. Un appareil de raccordement d'outil d'assemblage de fond de puits comprenant un raccordement fileté à vis mâle fourni sur un premier élément tubulaire et un raccordement fileté à vis femelle fourni sur un deuxième élément tubulaire qui, lorsqu'il est raccordé en utilisation, constitue un raccordement dans un outil d'assemblage de fond de puits, dans lequel le raccordement fileté à vis mâle comprend un élément formant broche (114) ayant une extrémité destinée à être insérée jusque dans le raccordement fileté à vis femelle et un filetage de vis (118) formé sur une surface externe de celui-ci, et dans lequel le raccordement fileté à vis femelle comprend un élément formant boîte (116) ayant une extrémité dans laquelle le raccordement fileté à vis mâle peut être inséré et un filetage de vis (120) formé sur une surface interne de celui-ci,
dans lequel les filetages de vis (118, 120) sont des filetages de vis uniques, ininterrompus et parallèles et sont arrangés avec un axe longitudinal substantiellement parallèle à l'axe longitudinal de l'élément tubulaire respectif,
et dans lequel l'élément formant broche (114) comprend un épaulement de réception de boîte (128) qui est distal d'une extrémité de face plate la plus externe longitudinalement (114E) et situé de façon radialement externe et longitudinalement interne par rapport à un filetage correspondant (118), et l'élément formant boîte (116) comprend une face effilée (126) formée à une extrémité extérieure de celui-ci et située de façon radialement et longitudinalement externe par rapport à un filetage correspondant (120), l'épaulement de réception de boîte (128) de l'élément formant broche (114) étant arrangé pour s'abouter contre la face effilée (126) de l'élément formant boîte (116) en utilisation pour fournir une jonction d'épaulement primaire dans laquelle la majorité du couple peut être délivrée et stockée lors d'un raccordement en utilisation ; **caractérisé en ce que** l'appareil de raccordement comprend en outre un moyen d'indication de surcouple (130, 114e) comprenant un épaulement de projection radialement vers l'intérieur (130) de l'élément formant boîte (116) qui est situé de façon radialement et longitudinalement interne par rapport au filetage correspondant (120) et de façon distale de la face effilée (126) et qui est arrangé pour être espacé de l'extrémité de face plate (114E) de telle sorte qu'il y ait un écart visible (115) entre ceux-ci lorsque le raccordement est correctement couplé à un couple prédéterminé et conçu pour effectuer un contact avec l'extrémité de face plate (114E) lorsque le raccordement est couplé à un couple plus élevé que le couple prédéterminé ;
et dans lequel le diamètre interne soit de l'épaulement (130), soit de l'extrémité de face plate (114E) est plus grand que le diamètre interne de l'autre parmi l'épaulement (130) et l'extrémité de face plate (114E), de telle sorte qu'un opérateur puisse visualiser ledit contact depuis un trou débouchant de l'outil et identifier si le raccordement fileté à vis mâle (118) a été surcouplé dans le raccordement fileté à vis femelle (120).

2. Un appareil de raccordement d'outil d'assemblage de fond de puits selon la revendication 1, dans lequel l'écart visible (115) se trouve dans la région allant de 0,5 mm à 2 mm.

3. Un appareil de raccordement d'outil d'assemblage de fond de puits selon la revendication 1 ou la revendication 2, dans lequel l'épaulement de réception de boîte (128) de l'élément formant broche (114) est en angle relativement à un axe perpendiculaire par rapport à l'axe longitudinal (L) de l'élément formant broche.

4. Un appareil de raccordement d'outil d'assemblage de fond de puits selon la revendication 3, dans lequel l'épaulement de réception de boîte (128) est en angle à approximativement 15 degrés du radialement plus interne au plus externe vers le filetage correspondant (118).

5. Un appareil de raccordement d'outil d'assemblage de fond de puits selon la revendication 3 ou la revendication 4, dans lequel la face effilée (126) de l'élément formant boîte (116) est en angle relativement à un axe perpendiculaire par rapport à l'axe longitudinal (L) de l'élément formant boîte.

6. Un appareil de raccordement d'outil d'assemblage de fond de puits selon la revendication 5, dans lequel la face effilée (126) est en angle à approximativement 15 degrés du radialement plus interne au plus externe vers le filetage correspondant (120).

7. Un appareil de raccordement d'outil d'assemblage de fond de puits selon n'importe quelle revendication précédente, dans lequel le diamètre interne de l'épaulement de réception de boîte (130) de l'élément formant boîte femelle (116) est plus grand que le diamètre interne de l'élément formant broche mâle (114).

8. Un appareil de raccordement d'outil d'assemblage de fond de puits selon n'importe quelle revendication précédente, dans lequel un coin radialement le plus interne de l'épaulement de projection vers l'intérieur (130) de l'élément formant boîte (116) est découpé pour fournir une face effilée (131).

9. Un procédé d'indication d'un surcouple dans un raccordement fileté à vis utilisé pour raccorder un raccordement fileté à vis mâle fourni sur un premier élément tubulaire à un raccordement fileté à vis femelle fourni sur un deuxième élément tubulaire pour constituer un raccordement dans un outil d'assemblage de fond de puits, dans lequel le raccordement fileté à vis mâle comprend un élément formant broche (114) ayant une extrémité destinée à être insérée jusque dans le raccordement fileté à vis femelle et un filetage de vis (118) formé sur une surface externe de celui-ci, et dans lequel le raccordement fileté à vis femelle comprend un élément formant boîte (116) ayant une extrémité dans laquelle le raccordement fileté à vis mâle peut être inséré et un filetage de vis (120) formé sur une surface interne de celui-ci,
dans lequel les filetages de vis (118, 120) sont des filetages de vis uniques, ininterrompus et parallèles et sont arrangés avec un axe longitudinal substantiellement parallèle à l'axe longitudinal de l'élément tubulaire respectif,
et dans lequel l'élément formant broche (114) comprend un épaulement de réception de boîte (128) qui est distal d'une extrémité de face plate la plus externe longitudinalement (114E) et situé de façon radialement externe et longitudinalement interne par rapport à un filetage correspondant (118), et l'élément formant boîte (116) comprend une face effilée (126) formée à une extrémité extérieure de celui-ci et située de façon radialement et longitudinalement externe par rapport à un filetage correspondant (120), l'épaulement de réception de boîte (128) de l'élément formant broche (114) étant arrangé pour s'abouter contre la face effilée (126) de l'élément formant boîte (116) en utilisation pour fournir une jonction d'épaulement primaire dans laquelle la majorité de couple peut être délivrée et stockée lors d'un raccordement en utilisation ; **caractérisé en ce que** le procédé comprend ;
fournir un épaulement de projection radialement vers l'intérieur (130) de l'élément formant boîte (116) situé de façon radialement et longitudinalement interne par rapport au filetage correspondant (120) et de façon distale de la face effilée (126) et qui est arrangé pour être espacé de l'extrémité de face plate (114E) de telle sorte qu'il y ait un écart visible (115) entre ceux-ci lorsque le raccordement est correctement couplé à un couple prédéterminé et conçu pour effectuer un contact avec l'extrémité de face plate (114E) lorsque le raccordement est couplé à un couple plus élevé que le couple prédéterminé ;
et dans lequel le diamètre interne soit de l'épaulement (130), soit de l'extrémité de face plate (114E) est plus grand que le diamètre interne de l'autre parmi l'épaulement (130) et l'extrémité de face plate (114E), de telle sorte qu'un opérateur puisse visualiser ledit contact depuis un trou débouchant de l'outil et identifier si le raccordement fileté à vis mâle (118) a été surcouplé dans le raccordement fileté à vis femelle (120) ;
coupler le raccordement fileté à vis mâle (118) dans le raccordement fileté à vis femelle (120) ; et
visualiser l'écart (115) depuis un trou débouchant de l'outil et identifier si le raccordement fileté à vis mâle (118) a été surcouplé dans le raccordement fileté à vis femelle (120).

10. Un procédé d'indication d'un surcouple dans un raccordement fileté à vis selon la revendication 9, dans lequel le diamètre interne de l'épaulement (130) de l'élément formant boîte femelle (116) est plus grand que le diamètre interne de la portion d'extrémité (114E) de l'élément formant broche mâle (114).
